# EUROPEAN PATENT APPLICATION

(11) **EP 3 945 350 A1**
(43) Date of publication of application: **02.02.2022**
(21) Application number: 21187336.9
(22) Date of filing: 23.07.2021
(51) Int. Cl.: G01S 19/14, G01C 15/00, G01S 19/23, G01S 19/43

(54) **FINISHED SHAPE OBSERVATION METHOD, OBSERVATION SYSTEM, AND PROGRAM USING GNSS**

(30) Priority: 30.07.2020 JP 2020128787
(71) Applicant: TOPCON CORPORATION, Tokyo 174-8580 (JP)
(72) Inventor: NAKAMURA, Keisuke, Tokyo 174-8580 (JP); MIYAJIMA, Motohiro, Tokyo 174-8580 (JP); SHIMIZU, Ryosuke, Tokyo 174-8580 (JP); ICHIRIYAMA, Umihiro, Tokyo 174-8580 (JP)
(74) Representative: dompatent von Kreisler Selting Werner - Partnerschaft von Patent- und Rechtsanwälten mbB

(57) **Abstract**

Provided is a technology that enables finished shape observation of a route by using a GNSS, and enables even a beginner to easily perform finished shape observation by following precautions for use of a GNSS. A finished shape observation system (1) includes a reference station (4), a mobile device (2) as a mobile station, and a mobile terminal (3) including a display unit (31), and is configured to measure a plurality of observation points between a first known point and a second known point by using a GNSS, wherein a terminal control unit (35) of the mobile terminal includes a mobile station first confirming unit (352) configured to confirm whether a slope distance between the reference station and the mobile station is larger than a prescribed value when measuring each of the observation points, a mobile station second confirming unit (353) configured to confirm whether a slope distance between the first known point and the mobile station is larger than a prescribed value when measuring each of the observation points, and a mobile station third confirming unit (354) configured to confirm whether an elapsed time from a measurement time of the first known point exceeds a prescribed value when measuring each of the observation points.

## Description

### Technical Field

The present invention relates to a finished shape observation method, observation system, and program, and more specifically, to a finished shape observation method, observation system, and observation program related to route construction using a GNSS.

### Background Art

In construction of a route such as a road, based on three-dimensional design data of each of center points set at predetermined intervals on a route centerline, constituent points indicating a route width, and constituent points as terrain change points on a cross section orthogonal to the centerline, stakes are installed at the center points and constituent points, and based on these stakes, cutting and embankment construction work, etc., are performed. After the construction, coordinates of the center points and constituent points are measured to confirm a finished shape of the route. For this finished shape observation, a total station is used (for example, refer to Patent Literature 1).

### Citation List

### Patent Literature

Patent Literature 1: Japanese Published Unexamined Patent Application No. 2008-082895

### Summary of Invention

### Technical Problem

However, in finished shape observation using a total station, from a perspective of measurement accuracy guarantee, a measurement distance from the total station is prescribed to be not more than 150 meters (limit value), and to observe a route extending in units of kilometers by using a total station, an installation point of the total station must be moved a plurality of times. Therefore, at the site, it is pointed out that the total station installation is troublesome, and the demand for finished shape observation using a GNSS has increased.

The present invention solves the problem described above, and an object thereof is to provide a technology that enables finished shape observation of a route by using a GNSS, and enables even a beginner to easily perform finished shape observation using a GNSS by following precautions for use of the GNSS.

### Solution to Problem

In order to solve the problem described above, a finished shape observation method according to an aspect of the present invention is a finished shape observation method in which a plurality of observation points between a first known point and a second known point are measured by using a GNSS, and includes, when measuring each of the observation points, a step of confirming whether a slope distance between a reference station and a mobile station is larger than a prescribed value, a step of confirming whether a slope distance between the first known point and the mobile station is larger than a prescribed value, and a step of confirming whether an elapsed time from a measurement time of the first known point exceeds a prescribed value.

In the aspect described above, it is also preferable that the finished shape observation method includes, when the first known point is measured, a step of comparing the measured first known point and three-dimensional position coordinates of the first known point stored in advance and confirming whether an error is within a prescribed value.

In the aspect described above, it is also preferable that the finished shape observation method includes, when the second known point is measured, a step of confirming whether a slope distance between the second known point and the first known point is larger than a prescribed value.

In the aspect described above, it is also preferable that the finished shape observation method includes, when the second known point is selected, a step of picking up known points satisfying a condition that a slope distance to the first known point is within the prescribed value and listing and displaying the picked-up known points.

In the aspect described above, it is also preferable that the finished shape observation method includes, when the second known point is selected, a step of displaying a known point satisfying a condition that a slope distance to the first known point is within a prescribed value and closest to a current location of the mobile station.

In the aspect described above, it is also preferable that the finished shape observation method includes, after the second known point is measured, a step of confirming whether to extend observation with a user, and when the observation is extended, the second known point in a current measurement cycle is set as the first known point for a next measurement cycle.

In order to solve the problem described above, a finished shape observation system according to an aspect of the present invention includes a reference station, a mobile device as a mobile station, and a mobile terminal including a display unit, and is configured to measure a plurality of observation points between a first known point and a second known point by using a GNSS, wherein a terminal control unit of the mobile terminal includes a mobile station first confirming unit configured to confirm whether a slope distance between the reference station and the mobile station is larger than a prescribed value when measuring each of the observation points, a mobile station second confirming unit configured to confirm whether a slope distance between the first known point and the mobile station is larger than a prescribed value when measuring each of the observation points, and a mobile station third confirming unit configured to confirm whether an elapsed time from a measurement time of the first known point exceeds a prescribed value when measuring each of the observation points.

In the aspect described above, it is also preferable that the terminal control unit includes a first known point confirming unit configured to, when the first known point is measured, compare the measured first known point and three-dimensional position coordinates of the first known point stored in advance and determine whether an error is within a prescribed value.

In the aspect described above, it is also preferable that the terminal control unit includes a second known point confirming unit configured to, when the second known point is measured, confirm whether a slope distance between the second known point and the first known point is larger than a prescribed value.

In the aspect described above, it is also preferable that the second known point confirming unit picks up known points satisfying a condition that a slope distance to the first known point is within a prescribed value and lists and displays the picked-up known points when the second known point is selected.

In the aspect described above, it is also preferable that the second known point confirming unit displays a known point satisfying a condition that a slope distance to the first known point is within a prescribed value and closest to a current location of the mobile station when the second known point is selected.

In the aspect described above, it is also preferable that the finished shape observation system includes an extension confirming unit configured to confirm whether to extend observation with a user after the second known point is measured, and when the observation is extended, sets the second known point in a current measurement cycle as the first known point for a next measurement cycle.

It is also preferable that the finished shape observation method according to any one of Claims 1 to 6 is described as a computer program that enables execution of the method.

### Effects of Invention

According to the finished shape observation method, observation system, and program of the present invention, even a beginner can easily perform finished shape observation using a GNSS.

### Brief Description of the Drawings

FIG. 1 is an on-site use image view of a finished shape observation system according to an embodiment of the present invention.
FIG. 2 is a configuration block diagram of the same observation system.
FIG. 3 is a flowchart describing "basic work" of a finished shape observation method using the same observation system.
FIG. 4 is a flowchart describing "observation assisting work" of the finished shape observation method using the same observation system.
FIG. 5 is an example of a screen to be displayed on a mobile terminal when confirming a first known point in the same observation method.
FIG. 6 is a display example of determination notification to be displayed in the same observation method.
FIG. 7 is an example of a screen to be displayed on a mobile terminal at the time of finished shape observation in the same observation method.
FIG. 8 is a display example of determination notification to be displayed in the same observation method.
FIG. 9 is a display example of determination notification to be displayed in the same observation method.
FIG. 10 is a display example of determination notification to be displayed in the same observation method.
FIG. 11 is an example of a setting screen for finished shape observation to be displayed in the same observation method.
FIG. 12 is an example of a screen to be displayed on a mobile terminal when confirming a second known point in the same observation method.
FIG. 13 is a display example of determination notification to be displayed in the same observation method.
FIG. 14 is an example of a screen to be displayed on a mobile terminal when confirming a second known point according to Modification (1) of the embodiment.
FIG. 15 is an example of a screen to be displayed on a mobile terminal when confirming a second known point according to Modification (2).
FIG. 16 is a configuration block diagram of an observation system according to Modification (3) of the embodiment.
FIG. 17 is a flowchart of an observation method according to the Modification (3).
FIG. 18 is a display example of inquiry display to be displayed in the Modification (3).

### Description of Embodiments

Next, a preferred embodiment of the present invention will be described with reference to the drawings.

### (System)

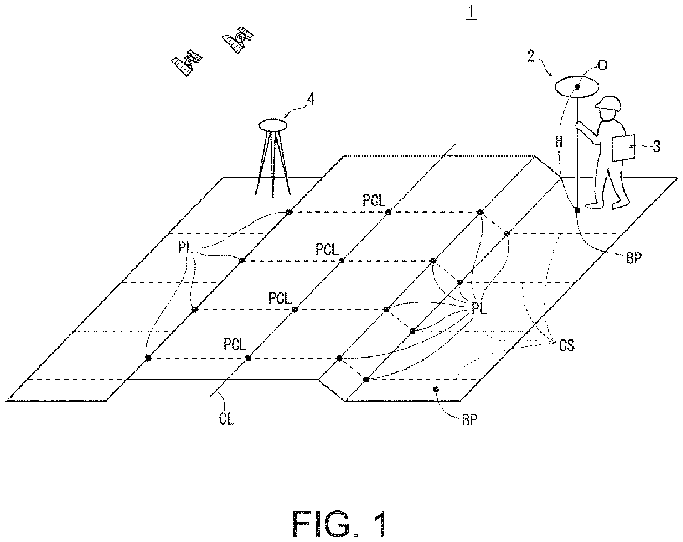

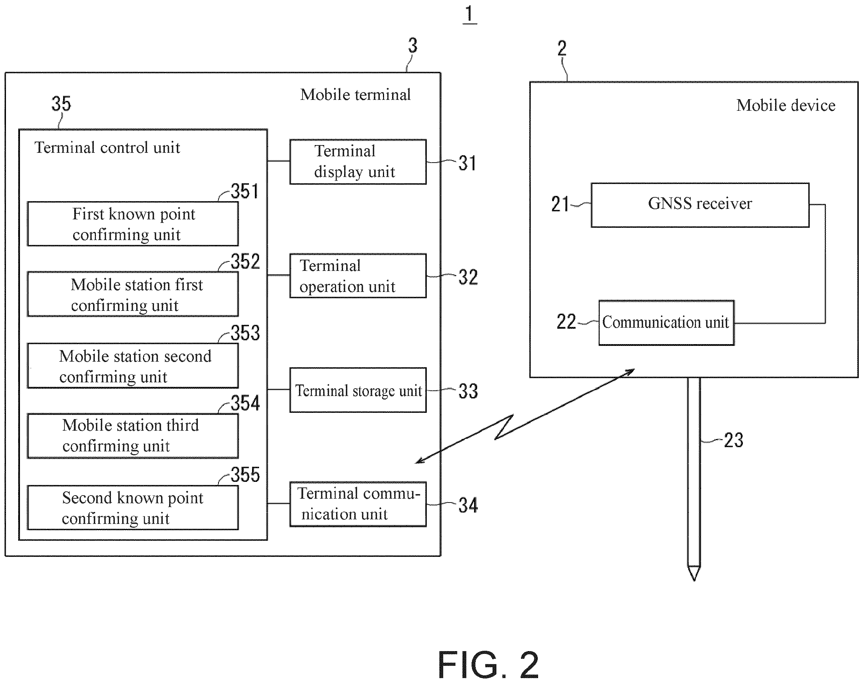

FIG. 1 is an on-site use image view of a finished shape observation system 1 (hereinafter, simply referred to as "observation system 1") according to an embodiment of the present invention, and FIG. 2 is a configuration block diagram of the observation system 1.

As illustrated in FIG. 1, at the site, there are center points PCL set at predetermined intervals on a centerline CL of a route, management cross sections CS of the respective center points, constituent points PL as points indicating a route width in each management cross section or terrain change points, and work reference points (hereinafter, referred to as "known points") BP set at positions at which finished shape observation can be efficiently performed and three-dimensional coordinates of which are known, etc. The center points PCL and constituent points PL are observation points of the observation system 1.

As illustrated in FIG. 1, the observation system 1 includes a mobile device 2, a mobile terminal 3, and a reference station 4.

The mobile device 2 and the reference station 4 measure positions by using a GNSS (Global Navigation Satellite System) which makes use of position signals from artificial satellites.

The reference station 4 is for obtaining coordinates of a mobile station by an analysis of a baseline vector to the mobile station, and for example, as illustrated in FIG. 1, may have a form as a fixed station including a GNSS receiver (not illustrated) installed at the site, or a form disposed as a reference station that is virtually created based on data of electronic reference points installed all over a country and transmits information to the mobile station by using a network. In this way, the reference station 4 may be virtually disposed, so that it is not described in FIG. 2.

### (Mobile Device)

The mobile device 2 is a mobile station with respect to the reference station 4, using a GNSS (Global Navigation Satellite System) . The mobile device 2 is carried by a worker during observation. The mobile device 2 includes, as illustrated in FIG. 2, a GNSS receiver 21, a communication unit 22, and a support member 23.

The GNSS receiver 21 is an antenna-integrated navigation signal receiving device. The GNSS receiver 21 can acquire its own position by receiving a navigation signal transmitted from a navigation satellite and performing positioning by measuring a transmission time of the navigation signal. The GNSS receiver 21 converts the received navigation signal into an electric signal, and outputs the electric signal as positioning data.

The GNSS receiver 21 is supported on a surface orthogonal to the support member 23 at an upper end of the pole-shaped support member 23 having a known length H (FIG. 1). A worker supports the support member 23 vertically and performs positioning with the GNSS receiver 21 in a horizontal state to acquire three-dimensional coordinates of a reference point O (FIG. 1) of the GNSS receiver 21. It is also preferable that the support member 23 is configured to include a level and a tilt sensor for horizontalizing the GNSS receiver 21.

The communication unit 22 is a communication control device that connects the GNSS receiver 21 and the mobile terminal 3 described later in a wired manner or wirelessly. As communication standards for realizing the communication unit 22, near field communication standards such as Bluetooth (registered trademark) or infrared communication may be adopted. Alternatively, Wi-Fi (registered trademark) as one of wireless LAN standards or 4G (fourth-generation mobile communication system) may be adopted.

### (Mobile Terminal)

The mobile terminal 3 is a so-called computer terminal such as a mobile phone, a smartphone, a tablet, a PDA, or a data collector. The mobile terminal 3 is carried by the worker during observation. The mobile terminal 3 includes, as illustrated in FIG. 2, a terminal display unit 31, a terminal operation unit 32, a terminal storage unit 33, a terminal communication unit 34, and a terminal control unit 35.

The terminal display unit 31 is, for example, a touch-panel type liquid crystal display configured integrally with the terminal operation unit 32. The terminal display unit 31 and the terminal operation unit 32 may be provided separately. The terminal display unit 31 displays screens according to details of observation, and the respective screens are switched according to details of observation.

The terminal storage unit 33 is, for example, an HDD. In the terminal storage unit 33, a communication program and various programs for executing finished shape observation are stored. In addition, three-dimensional coordinates of the respective work reference points BP are stored together with identification information (for example, known points NO. 1, NO. 2..., etc.). Further, limit values and recommended values related to finished shape observation are stored. Moreover, positioning data received from the mobile device 2 are saved, and measured values obtained through arithmetic processing are saved.

The terminal communication unit 34 is a communication control device that enables wired or wireless communication with the communication unit 22 of the mobile device 22 and has the same communication standards as those of the communication unit 22.

The terminal control unit 35 is a control unit including at least a CPU and a memory (ROM, RAM), etc. The terminal control unit 35 controls the mobile terminal 3 and the mobile device 2 based on input signals from the terminal communication unit 34 and the terminal operation unit 32, etc. The terminal control unit 35 calls and executes a program for executing an observation method described later. The terminal control unit 35 acquires three-dimensional position coordinates of the reference point O of the mobile device 2 based on positioning data received from the mobile device 2, and through offset observation using the length H of the support member 23, calculates three-dimensional position coordinates of a point designated by a tip end of the support member 23.

The terminal control unit 35 further includes, for performing an observation assisting work of the finished shape observation method, functional units including a first known point confirming unit 351, a mobile station first confirming unit 352, a mobile station second confirming unit 353, a mobile station third confirming unit 354, and a second known point confirming unit 355. Each functional unit is configured by electronic circuits of a CPU (Central Processing Unit), an ASIC (Application Specific Integrated Circuit), or a PLD (Programmable Logic Devices) such as an FPGA (Field Programmable Gate Array), etc. These functional units will be described in the finished shape observation method (observation assistance) described later.

### (Finished Shape Observation Method: Basic Work)

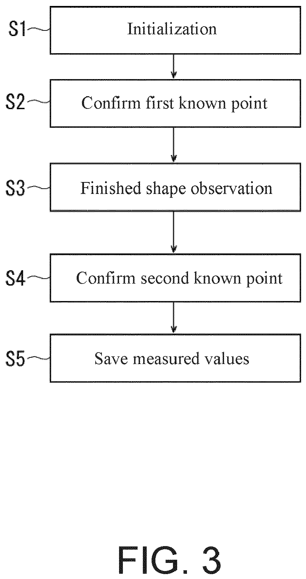

FIG. 3 is a flowchart describing "basic work" of a finished shape observation method using the observation system 1.

When finished shape observation is started with the observation system 1, the processing shifts to Step S1, and a worker initializes the observation system 1 first. Specifically, the worker brings the mobile device 2 into contact with any one of known points (work reference point) BP, and confirms that there is no large error in the measured values of the known point BP. When there is an initialization error, initialization is performed until values in the horizontal direction and the vertical direction reach values eliminating the initialization error.

Next, the processing shifts to Step S2, and the worker selects a known point at which a management cross section CS (single or multiple) for finished shape observation can be sufficiently observed as a start point (hereinafter, referred to as a first known point "BP (START) "), and confirms the first known point "BP (START)". Specifically, the worker brings the mobile device 2 into contact with the first known point "BP (START) ", and measures the first known point "BP (START) " with the GNSS. Positioning data of the first known point "BP (START) " is transmitted to the mobile terminal 3, and the mobile terminal 3 acquires three-dimensional position coordinates of the first known point "BP (START)" from the positioning data.

Next, the processing shifts to Step S3, and the worker starts finished shape observation. Specifically, the worker brings the mobile device 2 into contact with each of the center points PCL and constituent points PL on the management cross section CS selected in Step S102 and measures the respective observation points with the GNSS, and the mobile terminal 3 acquires three-dimensional position coordinates of the respective points from positioning data of the respective points.

Next, the processing shifts to Step S4, and the worker selects an end point (hereinafter, referred to as a second known point "BP (END)") among the work reference points (known points), and confirms the second known point "BP (END)". Specifically, the worker brings the mobile device 2 into contact with the second known point "BP (END)", and measures the second known point "BP (END)" with the GNSS. Positioning data of the second known point "BP (END)" is transmitted to the mobile terminal 3, and the mobile terminal 3 acquires three-dimensional position coordinates of the second known point "BP (END)" from the positioning data.

Next, the processing shifts to Step S5, and the mobile terminal 3 saves the measured values of the finished shape observation in Step S3 in the terminal storage unit 33 and ends the observation. Based on the measured values, the worker creates a finished shape observation report. This is the "basic work" of the finished shape observation method using the observation system 1.

### (Finished Shape Observation Method: Observation Assistance)

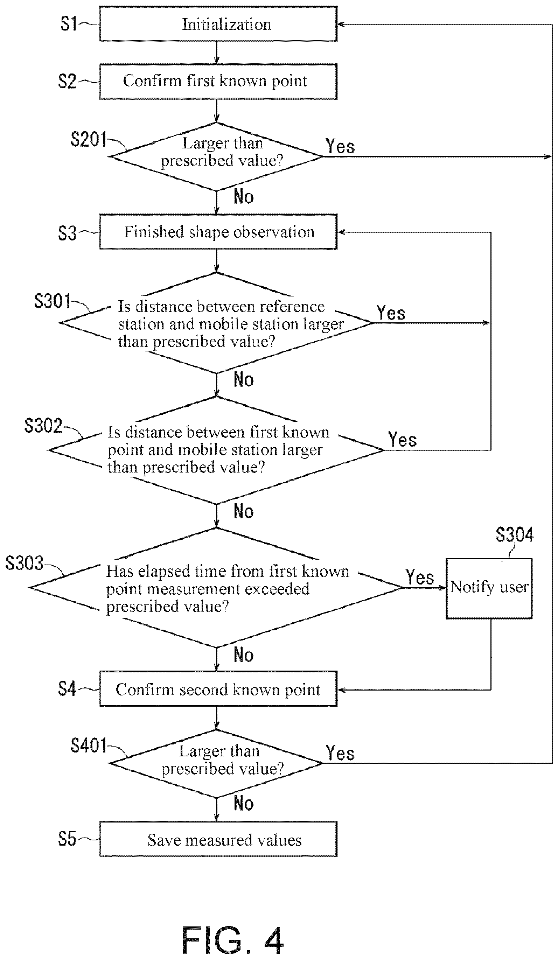

Next, an observation assistance in the finished shape observation method using the observation system 1 will be described. FIG. 4 is a flowchart describing an "observation assisting work" of the finished shape observation method using the observation system 1.

### (First Known Point Confirmation Assistance)

As described in FIG. 3, when finished shape observation is started with the observation system 1, the observation system 1 measures, at first, the first known point "BP (START) " (Step S2). At this time, as Step S201, the first known point confirming unit 351 of the terminal control unit 35 functions.

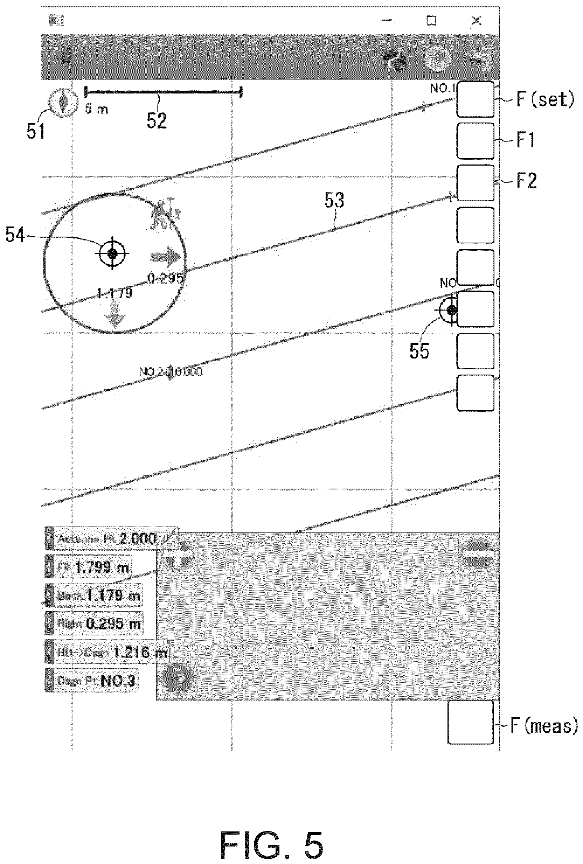

FIG. 5 is an example of a screen to be displayed on the mobile terminal 3 when confirming the first known point. On the screen of the terminal display unit 31, the site is displayed in a planar map together with an azimuth indication 51 indicating north, south, east, and west, and a scale indication 52 indicating a scale, and the management cross section CS is indicated by a management cross section line 53, and a current location of the mobile device 2 is indicated by a mark 54. On the screen of the terminal display unit 31, function icons F1, F2..., are displayed, and among these, an icon "F (meas)" is a measurement button, and an icon "F (set)" is a setting button. A known point (work reference point) selected by the worker as the first known point "BP (START) " is indicated by a mark 55. The terminal control unit 35 guides the mobile device 2 (mark 54) to the first known point "BP (START)" (mark 55), and displays moving distances in the horizontal direction and the vertical direction.

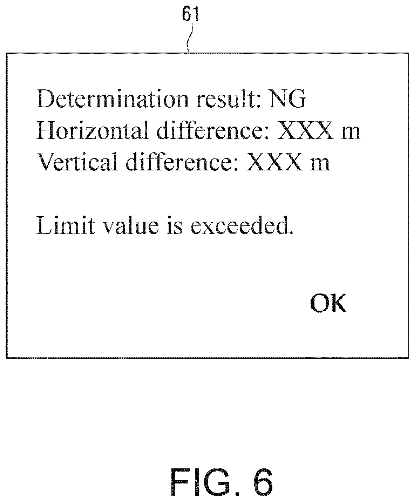

When the worker arrives at the first known point "BP (START)" and presses the observation button "F (meas)", as Step S201, the first known point confirming unit 351 functions. The first known point confirming unit 351 compares the measured first known point "BP (START)" and three-dimensional position coordinates of the first known point "BP (START) " stored in the terminal storage unit 33, and determines whether an error is within prescribed values (limit values, horizontal difference: 20 millimeters, vertical difference: 10 millimeters) . When the error is larger than the prescribed value, the first known point confirming unit 351 displays a determination notification display 61 as illustrated in FIG. 6. The determination notification display 61 displays that the error is larger than the prescribed value and is determined to be unacceptable (NG), and displays a direction determined to be unacceptable out of the horizontal direction and the vertical direction and a difference value in the direction. When the result of the determination is NG, the worker returns the processing to Step S1 and performs initialization again, and when the result of the determination is OK, the worker can advance the processing to the next Step S3 (finished shape observation).

### (Finished Shape Observation Assistance No. 1)

As described in FIG. 3, after confirming the first known point "BP (START) ", the observation system 1 shifts to finished shape observation (Step S3). At this time, as Step S301, the mobile station first confirming unit 352 of the terminal control unit 35 functions.

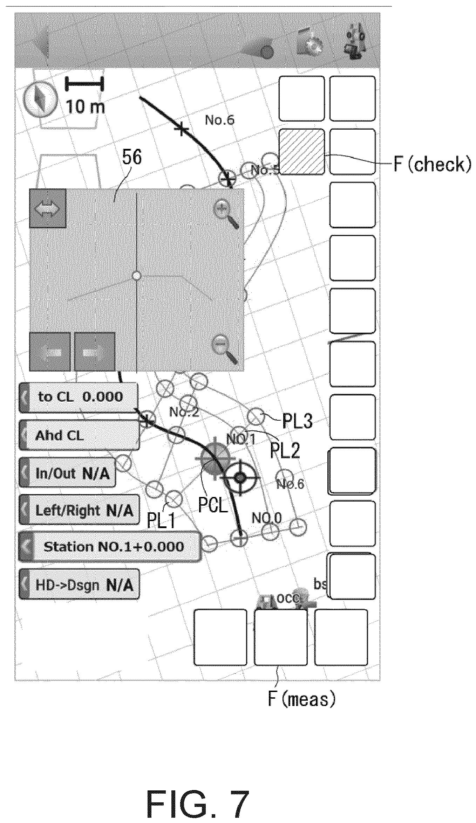

FIG. 7 is an example of a screen to be displayed on the mobile terminal 3 at the time of finished shape observation. On the screen of the terminal display unit 31, a cross-sectional view 56 of the management cross section CS (for example, section No. 1) is displayed along with a planar map. The worker refers to this cross-sectional view 56 and measures the center point PCL and the constituent points PL1 to PL3 on the section No. 1.

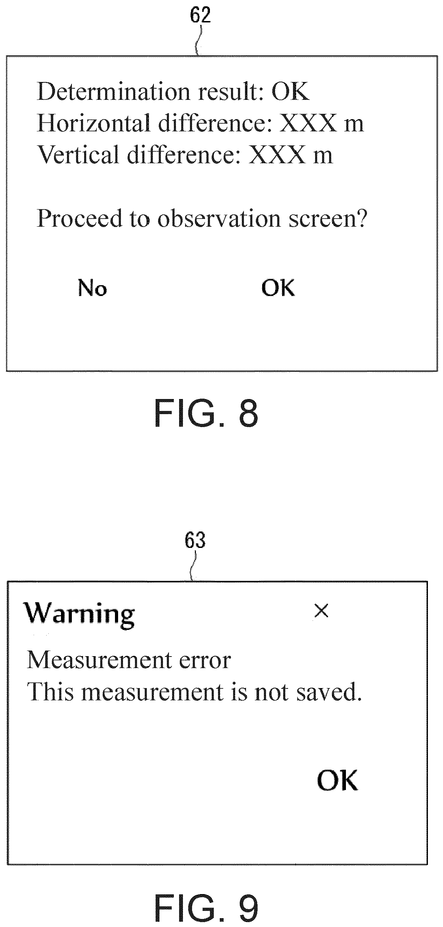

When the worker arrives at the center point PCL or any one of the constituent points PL1 to PL3 and presses the observation button "F (meas) ", as Step S301, the mobile station first confirming unit 352 functions. The mobile station first confirming unit 352 confirms (determines) whether a slope distance between the current mobile device 2 (mobile station) and the reference station 4 is larger than a prescribed value (limit value: 500 meters). This is because a slope distance from the reference station 4 larger than the prescribed value may influence the measurement accuracy of the GNSS. When the slope distance is within the prescribed value, the mobile station first confirming unit 352 displays, for example, a determination notification display 62 illustrated in FIG. 8 to urge movement to a next point. When the slope distance is larger than the prescribed value, for example, an error dialog as displayed on a determination notification display 63 in FIG. 9 is displayed, and without storing this measurement in the terminal storage unit 33, the processing returns to Step S3.

### (Finished Shape Observation Assistance No. 2)

At the time of finished shape observation, when the observation button "F (meas)" is pressed as described above, subsequent to Step S301, as Step S302, the mobile station second confirming unit 353 functions. The mobile station second confirming unit 352 confirms whether a slope distance between the current mobile device 2 (mobile station) and the first known point "BP (START)" is larger than a prescribed value (recommended value: 100 to 200 meters) . This is because a slope distance from the first known point "BP (START)" larger than the prescribed value may influence the measurement accuracy of the GNSS. When the slope distance is within the prescribed value, the mobile station second confirming unit 353 displays the determination notification display 62 illustrated in FIG. 8 to urge movement to a next point. When the slope distance is larger than the prescribed value, the error dialog displayed on the determination notification display 63 in FIG. 9 is displayed, and without storing this measurement in the terminal storage unit 33, the processing returns to Step S3.

### (Finished Shape Observation Assistance No. 3)

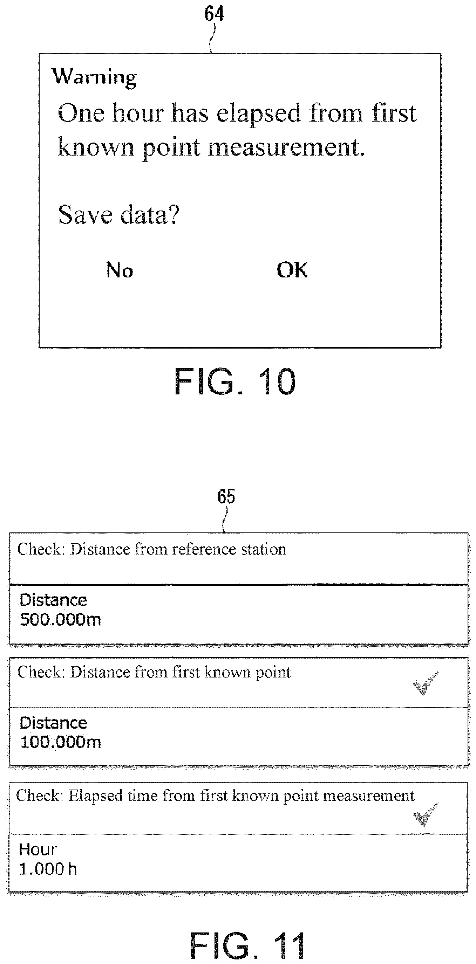

At the time of finished shape observation, when the observation button "F (meas)" is pressed as described above, subsequent to Step S302, as Step S303, the mobile station third confirming unit 354 functions. The mobile station third confirming unit 354 confirms whether an elapse of the measurement time in the current mobile device 2 (mobile station) from a measurement time of the first known point "BP (START)" exceeds a prescribed value (recommended value: 1 hour) . This is because when the elapsed time from the measurement time of the first known point "BP (START)" exceeds the prescribed value, a satellite movement may influence the measurement accuracy of the GNSS. When the elapsed time is within the prescribed value, the mobile station third confirming unit 354 displays the determination notification display 62 illustrated in FIG. 8 to urge movement to a next point. When the elapsed time exceeds the prescribed value, the processing shifts to Step S304, the warning dialog displayed on a determination notification display 64 in FIG. 10 is displayed, and the determination as to whether to save this measurement in the terminal storage unit 33 is left to a user (the measurement is not prohibited), and the processing shifts to Step S4.

FIG. 11 is an example of a setting screen for finished shape observation. The limit values and/or recommended values of "1. Distance between reference station and mobile station," "2. Distance between first known point and mobile station, " and "3. Elapsed time from first known point measurement" can be input by a worker. A value once set is basically taken over even after a site is changed. Here, concerning the recommended values, pressing the setting button "F (set)" causes switching to a setting screen 65 illustrated in FIG. 11, and flexible observation is realized according to a user's selection made by removing/inserting check marks.

### (Second Known Point Confirmation Assistance)

As described in FIG. 3, the observation system 1 ends the finished shape observation after measuring the second known point "BP (END)" (Step S4). At this time, as Step S401, the second known point confirming unit 355 of the terminal control unit 35 functions. As illustrated in FIG. 7, when the processing shifts to finished shape observation (Step S3), on the terminal display unit 31, as an icon for second known point confirming, a second known point confirmation button "F (check)" is additionally displayed. When the worker wants to end the finished shape observation, the worker presses the second known point confirmation button "F (check)".

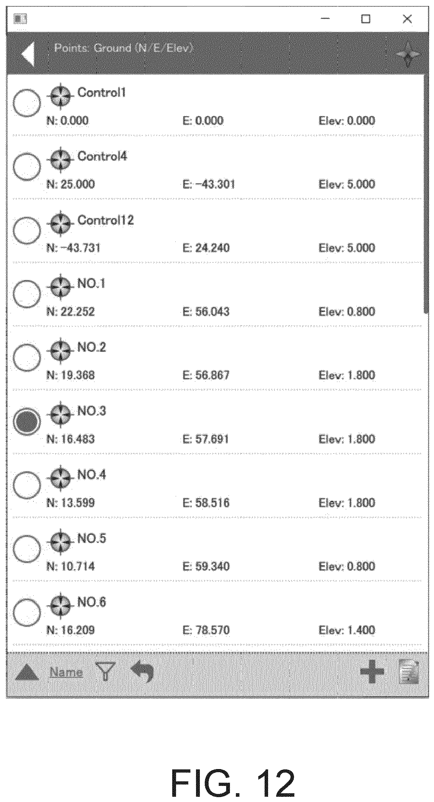

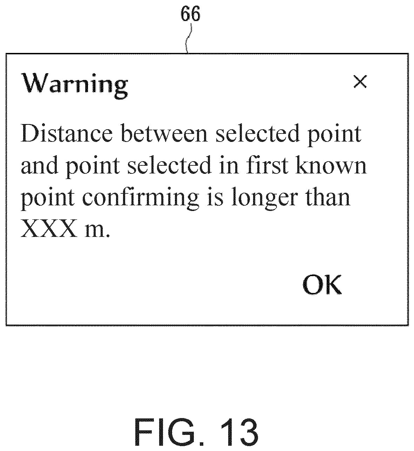

When the worker presses the second known point confirmation button "F (check)", as Step S401, the second known point confirming unit 355 functions. The second known point confirming unit 355 reads-out information on the known points BP (work reference points) from the terminal storage unit 33, displays a known point list as illustrated in, for example, FIG. 12, and causes the worker to select the second known point "BP (END)". At this time, the second known point confirming unit 355 determines whether a slope distance to the first known point "BP (START)" is larger than a prescribed value (recommended value: 100 to 200 m) . When the slope distance is within the prescribed value, the second known point confirming unit 355 shifts the processing to the next Step S5, and ends the finished shape observation. On the other hand, when a known point exceeding the prescribed value is selected, for example, a determination notification display 66 illustrated in FIG. 13 is displayed, and this selection is invalidated and the worker is urged to select another known point.

### (Effect)

As described above, according to the observation system 1, after the measurement accuracy for the first known point is secured by the first known point confirming unit 351, the processing shifts to finished shape observation, and three matters of note, that is, "1. Distance between reference station and mobile station," "2. Distance between first known point and mobile station, " and "3. Elapsed time from first known point measurement" that may cause a measurement error in GNSS observation are always confirmed by the mobile station first confirming unit 352, the mobile station second confirming unit 353, and the mobile station third confirming unit 354 when measuring each point, and the finished shape observation is ended after the measurement accuracy for the second known point is confirmed by the second known point confirming unit 355. Therefore, the worker can perform finished shape observation with guaranteed measurement accuracy by performing work in line with the observation flow of the observation system 1.

### (Preferred Modifications)

Next, a plurality of preferred modifications applicable to the embodiment described above will be given. The same components as in the embodiment are provided with the same reference signs, and descriptions of these are omitted.

### (Modification 1)

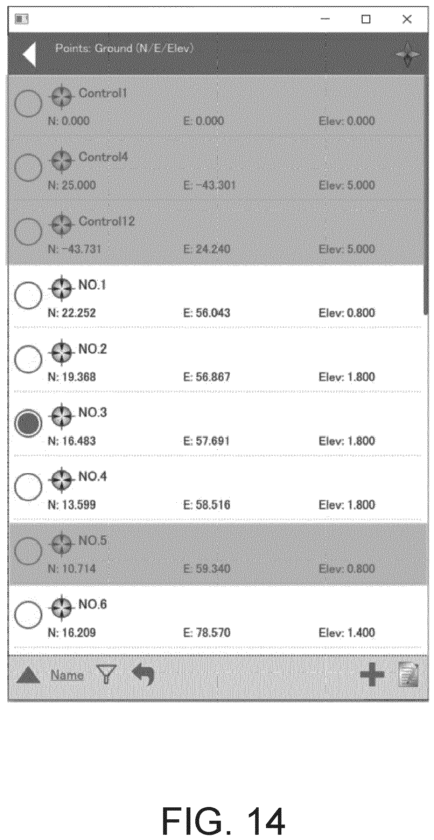

FIG. 14 is an example of a screen to be displayed on the mobile terminal 3 when confirming a second known point according to Modification (1) of the embodiment. In Modification (1), as second known point confirmation assistance, when the second known point confirmation button "F (check) " is pressed and a known point confirm list is opened, the second known point confirming unit 355 automatically and exclusively picks up and displays points satisfying a distance condition to the first known point "BP (START)" as candidates of the second known point "BP (END)". Coordinates of known points (work reference points) are stored in advance in the terminal storage unit 33, so that the second known point confirming unit 355 can select known points to be displayed according to the distance condition. This makes the worker's selection work easier in second known point confirming (Step S4) .

### (Modification 2)

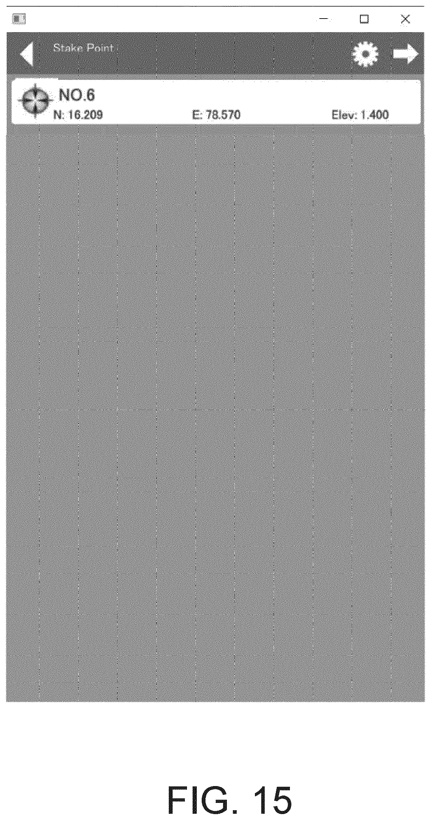

FIG. 15 is an example of a screen to be displayed on the mobile terminal 3 in second known point confirming according to Modification (2) of the embodiment. In Modification (2), as second known point confirmation assistance, when the second known point confirmation button "F (check) " is pressed, a point that satisfies the distance condition to the first known point "BP (START) " and is closest to a current location of the mobile device 2 (mobile station) is automatically picked up and displayed as a recommended second known point "BP (END) " (FIG. 15). Coordinates of known points (work reference points) are stored in advance in the terminal storage unit 33, so that the second known point confirming unit 355 can select a known point to be displayed according to the distance condition. Accordingly, the worker can eliminate the trouble of opening the known point confirm list as illustrated in FIG. 12 and making selection in second known point confirming (Step S4), so that the worker can more easily perform the second known point confirming.

### (Modification 3)

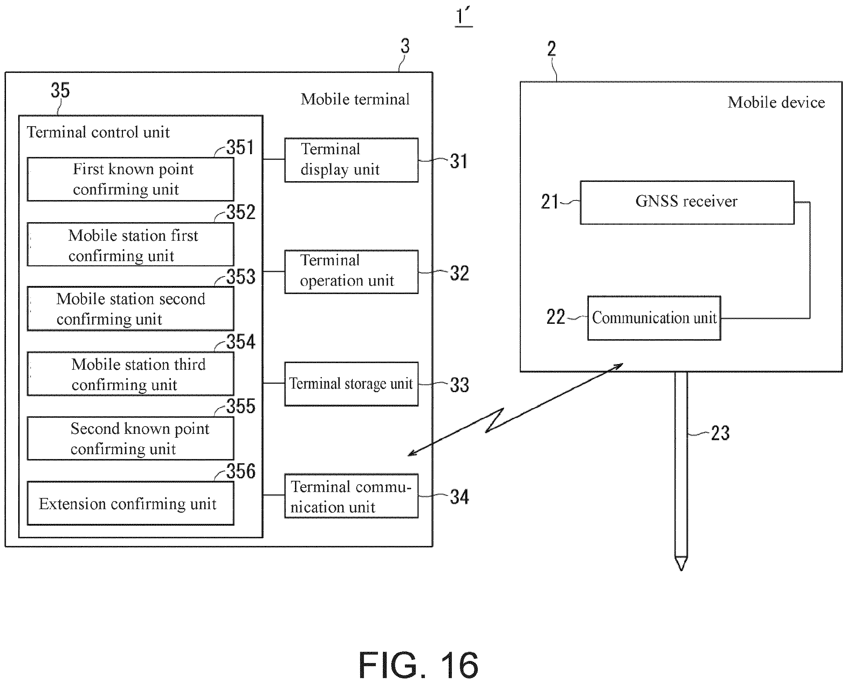

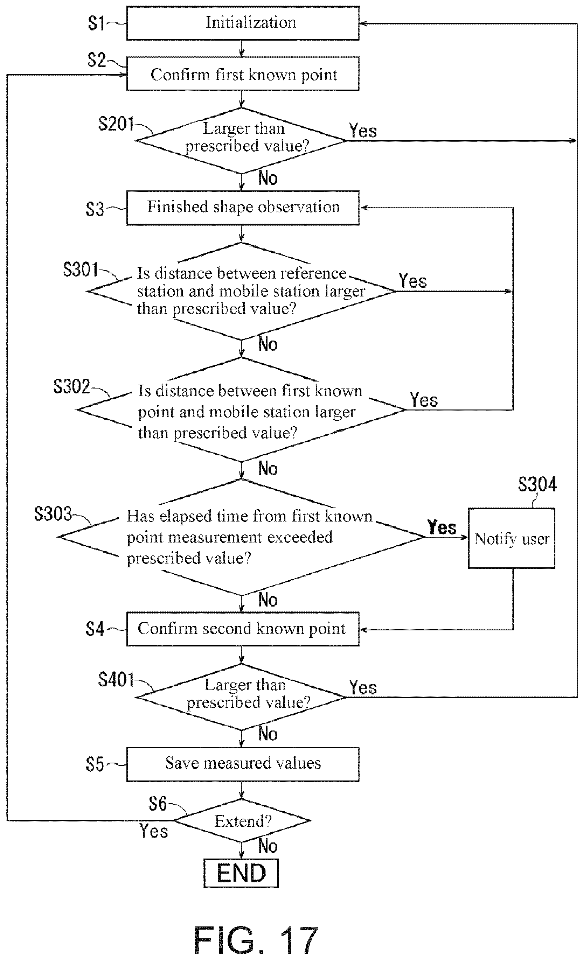

FIG. 16 is a configuration block diagram of an observation system 1' according to Modification (3) of the embodiment, and FIG. 17 is a flowchart of an observation method according to Modification (3). As illustrated in FIG. 16, the observation system 1' further includes an extension confirming unit 356 in the terminal control unit 35.

In finished shape observation, one cycle is from the measurement of the first known point "BP (START)" to the measurement of the second known point "BP (END) ", however, the measurement is desired to be continued after a rest or a pause in many cases. In this case, as described in Step S2 in FIG. 3, when starting the second cycle, a new first known point "BP (START)" must be selected again.

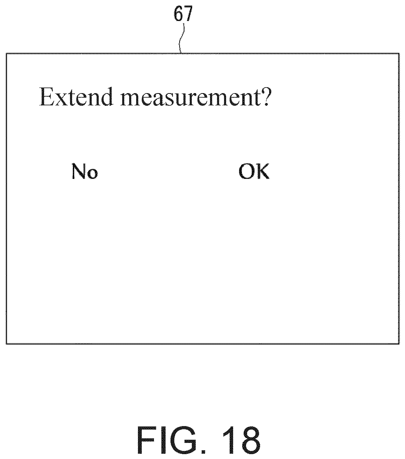

Therefore, in Modification (3), when the measured values in finished shape observation are saved in the terminal storage unit 33 in Step S5, the extension confirming unit 356 functions. The extension confirming unit 356 displays an extension confirming dialog as illustrated in an inquiry display 67 in FIG. 18 to ask whether to extend observation. When the observation is not extended, the observation is directly ended. On the other hand, when extension is selected, the extension confirming unit 356 sets the second known point "BP (END)" in the current cycle as a first known point "BP (START) " for the next cycle, and returns the processing to Step S2.

In this way, according to Modification (3), the extension confirming unit 356 confirms whether to extend the measurement with a user, and accordingly, the worker can eliminate the trouble of selecting and confirming the first known point "BP (START)" at the time of the next measurement.

An embodiment and modifications of a preferred observation method and observation system of the present invention have been described above, and the respective embodiment and modifications can be combined based on knowledge of a person skilled in the art, and such a combined one is also included in the scope of the present invention.

### Reference Signs List

- 1: Finished shape observation system
- 2: Mobile device (mobile station)
- 21: GNSS receiver
- 22: Communication unit
- 23: Support member
- 3: Mobile terminal
- 31: Terminal display unit
- 32: Terminal operation unit
- 33: Terminal storage unit
- 34: Terminal communication unit
- 35: Terminal control unit
- 351: First known point confirming unit
- 352: Mobile station first confirming unit
- 353: Mobile station second confirming unit
- 354: Mobile station third confirming unit
- 355: Second known point confirming unit
- 356: Extension confirming unit
- 4: Reference station
- BP: Known point

## Claims

1. A finished shape observation method in which a plurality of observation points between a first known point and a second known point are measured by using a GNSS, comprising:
when measuring each of the observation points,
a step of confirming whether a slope distance between a reference station and a mobile station is larger than a prescribed value;
a step of confirming whether a slope distance between the first known point and the mobile station is larger than a prescribed value; and
a step of confirming whether an elapsed time from a measurement time of the first known point exceeds a prescribed value.

2. The finished shape observation method according to Claim 1, comprising: when the first known point is measured, a step of comparing the first known point measured and three-dimensional position coordinates of the first known point stored in advance and confirming whether an error is within a prescribed value.

3. The finished shape observation method according to Claim 1, comprising: when the second known point is measured, a step of confirming whether a slope distance between the second known point and the first known point is larger than a prescribed value.

4. The finished shape observation method according to Claim 1, comprising: when the second known point is selected, a step of picking up known points satisfying a condition that a slope distance to the first known point is within a prescribed value and listing and displaying the picked-up known points.

5. The finished shape observation method according to Claim 1, comprising: when the second known point is selected, a step of displaying a known point satisfying a condition that a slope distance to the first known point is within a prescribed value and closest to a current location of the mobile station.

6. The finished shape observation method according to Claim 1, comprising: after the second known point is measured, a step of confirming whether to extend observation with a user, wherein when the observation is extended, the second known point in a current measurement cycle is set as the first known point for a next measurement cycle.

7. A finished shape observation system comprising a reference station; a mobile device as a mobile station; and a mobile terminal including a display unit, and configured to measure a plurality of observation points between a first known point and a second known point by using a GNSS, wherein
a terminal control unit of the mobile terminal includes
a mobile station first confirming unit configured to confirm whether a slope distance between the reference station and the mobile station is larger than a prescribed value when measuring each of the observation points,
a mobile station second confirming unit configured to confirm whether a slope distance between the first known point and the mobile station is larger than a prescribed value when measuring each of the observation points, and
a mobile station third confirming unit configured to confirm whether an elapsed time from a measurement time of the first known point exceeds a prescribed value when measuring each of the observation points.

8. The finished shape observation system according to Claim 7, wherein the terminal control unit includes a first known point confirming unit configured to, when the first known point is measured, compare the first known point measured and three-dimensional position coordinates of the first known point stored in advance and determine whether an error is within a prescribed value.

9. The finished shape observation system according to Claim 7, wherein the terminal control unit includes a second known point confirming unit configured to, when the second known point is measured, confirm whether a slope distance between the second known point and the first known point is larger than a prescribed value.

10. The finished shape observation system according to Claim 9, wherein the second known point confirming unit picks up known points satisfying a condition that a slope distance to the first known point is within a prescribed value and lists and displays the picked-up known points when the second known point is selected.

11. The finished shape observation system according to Claim 9, wherein the second known point confirming unit displays a known point satisfying a condition that a slope distance to the first known point is within a prescribed value and closest to a current location of the mobile station when the second known point is selected.

12. The finished shape observation system according to Claim 7, comprising: an extension confirming unit configured to confirm whether to extend observation with a user after the second known point is measured, and when the observation is extended, set the second known point in a current measurement cycle as the first known point for a next measurement cycle.

13. An observation program describing the finished shape observation method according to any one of Claims 1 to 6 as a computer program, and enabling execution of the method.
